# EUROPEAN PATENT SPECIFICATION

(11) **EP 2 767 170 B1**
(45) Date of publication and mention of the grant of the patent: **27.05.2015**
(21) Application number: 14155047.5
(22) Date of filing: 13.02.2014
(51) Int. Cl.: A22C 15/00

(54) **Loading device for loading sausages onto a conveying apparatus**
Beladeeinrichtung zum beladen von Würsten auf eine Fördervorrichtung
Chargeur pour le chargement des saucisses sur un dispositif de transport

(30) Priority: 19.02.2013 IT MO20130039
(43) Date of publication of application: 20.08.2014
(73) Proprietor: VE.MA.C. Societa' A Responsabilita' Limitata, 41051 Castelnuovo Rangone (MO) (IT)
(72) Inventor: Costantini, Maurizio, 41057 Spilamberto (MO) (IT); Vezzali, Franco, 41057 Spilamberto (MO) (IT); Malagoli, Uliano, 41041 Formigina (MO) (IT)
(74) Representative: Crugnola, Pietro

(56) References cited:
- DE-C1- 3 806 467
- US-A1- 2010 046 865
- US-A1- 2011 045 755

## Description

The present invention relates to a device for a sausage-loading line, intended for loading automatically sausages, such as for example, salami or continental sausages, onto seasoning frames.

In the prior art it is known to load manually the sausages that are provided with hooking means onto seasoning frames, consisting, for example, of a cord loop.

Devices are also known for loading sausages onto seasoning frames, which comprise a conveyor interposed between a sausage-making machine and a seasoning frame intended for receiving the sausages and sending the sausages to a seasoning room.

Between the outlet of the sausage-making machine and the conveyor a loading device is inserted that receives the sausages from said machine and loads the sausages onto the conveyor.

The conveyor is normally provided with a series of hooks on which the sausages are hung. Known loading devices have a relatively complex structure and have problems of synchronisation with the conveyor to which they have to transfer the sausages.

US 2011/045755 discloses a loading device with the features of the preamble of claim 1.

An object of the present invention is to provide a loading device for loading sausages onto a conveying line to seasoning frames that has a relatively simple structure and can be easily synchronised with the conveying device.

The object of the invention is achieved with a loading device according to claim 1.

Owing to the invention, it is possible to transfer in simple and reliable manner sausages from a making machine to a conveyor intended for transferring the sausages onto seasoning frames without the sausages being able to fall to the ground during the transfer to the conveyor, or, at least, minimising the percentage of sausages that fall to the ground.

The invention will be disclosed below, with reference to the attached drawings, in which:
Figure 1 is an elevation view of a loading device according to the invention;
Figure 2 is a top view of the device in Figure 1;
Figure 3 is a schematic representation of a sausage;
Figure 4 is a partial elevation view of the loading device according to the invention;
Figures 5, 5a, 5b, 6 and 7 illustrate a detail of the loading device according to the invention.

A loading device 1 according to the invention comprises a frame 2 to which a conveying device 3 is fixed that conveys the sausages 4 through the loading device 1. 1131097be-EN.docx

Above the conveying device 3 a guiding element is arranged comprising a rod 5 on which the hooking means 6 of the sausages 4 is hooked. When the hooking means 6 has been fitted to the rod 5, the sausages 4 rests on the conveying device 3, by means of which it is made to advance along the rod 5.

A first end portion 7 of the rod 5, at which the sausages 4 are fitted to the rod 5, is shaped so as to promote the insertion of the hooking means 6, for example with a section that is progressively reduced in the direction of a first end 8 of the rod 5.

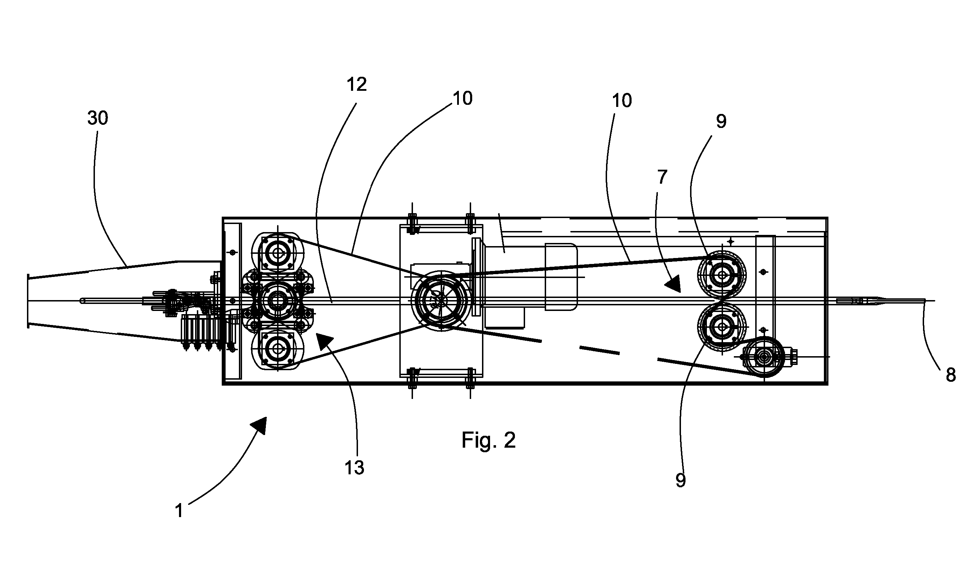

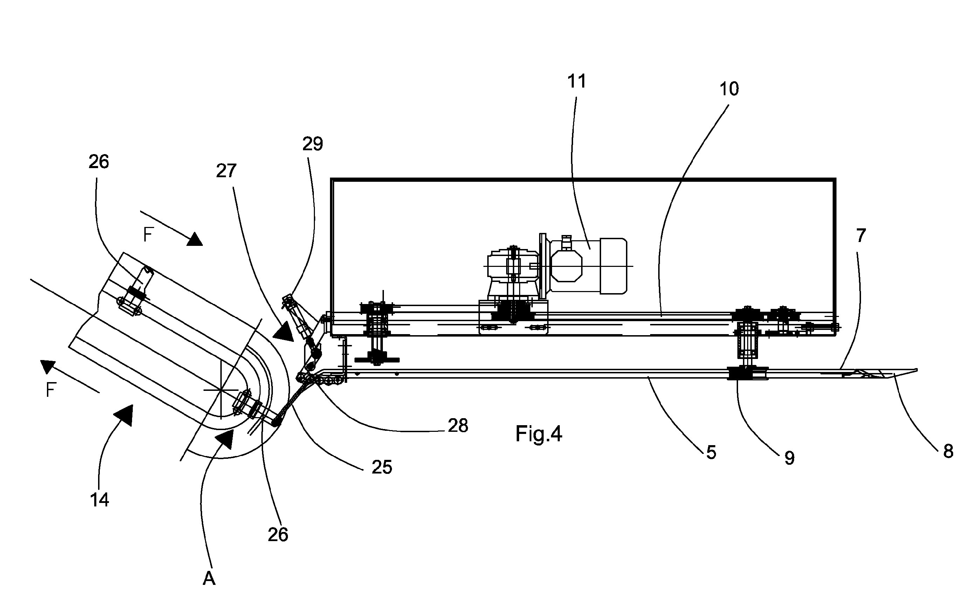

The rod 5 is supported, near the end portion 7 on a supporting element consisting of a pair of pulleys 9 (Figure 2), kept rotating by a belt transmission 10, driven by a reduction gear 11 (Figure 4).

The rotation of the pulleys 9 is used not to hinder the sliding of the hooking means 6 on the rod 5, when it reaches the height of the pulleys 9.

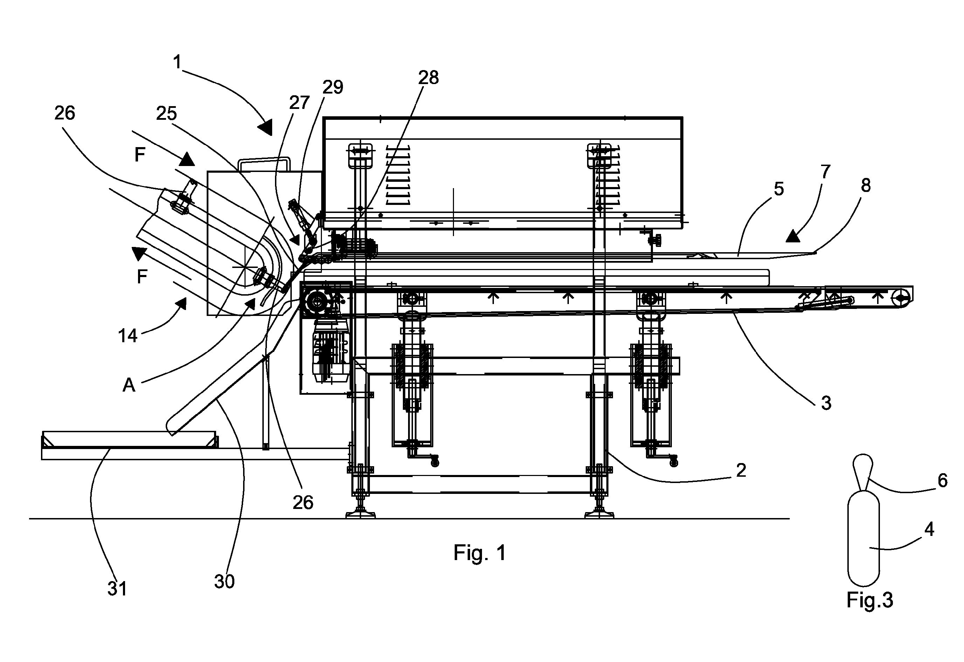

A second end portion 12 of the rod 5, near a second end 24 of the rod 5, opposite the first end 8, is supported on a supporting and synchronisation device 13, that, in addition to supporting the rod 5, is used for synchronising the loading device 1 according to the invention with a conveying apparatus 14 intended for receiving the sausages 4 and for conveying the sausages 4 to a seasoning frame. The conveying apparatus 14 is provided with supporting elements 26 that are arranged at substantially constant intervals along the conveying apparatus 14 and are moved in a conveying direction indicated by the arrows F in Figures 1 and 4.

The supporting and synchronisation device 13 comprises a first lever 15 and a second lever 16 both hinged on the same fulcrum 17. The first lever 15 is provided with a first pair of locking and supporting elements 18a, 18b placed on sides opposite the fulcrum 17. Similarly, the second lever 16 is provided with a second pair of locking and supporting elements 19a, 19b, which are also placed on sides opposite the fulcrum 17. The locking and supporting elements 18a, 18b, 19a, 19b are suitable for being inserted into suitable seats (which are not visible in the figures) of the rod 5, for supporting the rod 5, and are further intended for locking or enabling sliding of the hooking means 6 of the sausages 4 on the rod 5, when the sausages 4 reach the supporting and synchronisation device 13. The supporting and synchronisation device 13 further comprises a first cam 20 associated with the first lever 15 and a second cam 21 associated with the second lever 16.

The first cam 20 and the second cam 21 are rotated around respective rotation axes 22 and 23 by the belt transmission 10.

The rotation of the first cam 21 and of the second cam 22 causes oscillation of the first lever 15 and of the second lever 16. Because of this oscillation, the supporting and synchronisation device 13 can assume three different configurations.

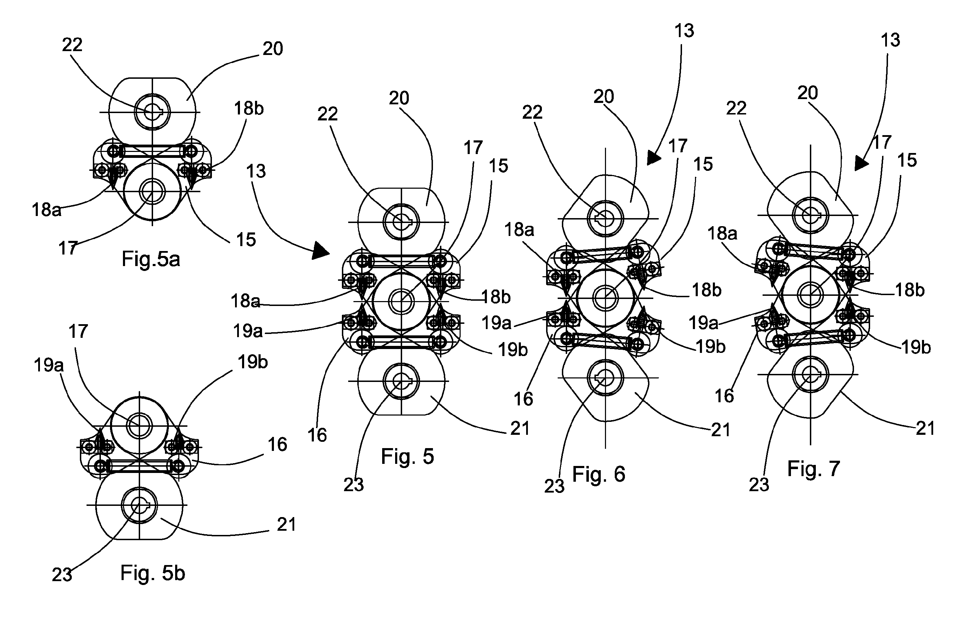

In a first configuration, shown in Figure 5, both the levers are arranged in such a manner that the respective locking and supporting elements 18a, 18b and 19a, 19b are arranged in the corresponding seats of the rod 5. In this configuration, the supporting and synchronisation device 13 stops the advancement of a sausage 4 when the hooking means 6 thereof comes into contact with the locking elements 18b and 19b.

In a second configuration, shown in Figure 6, the first lever 15 is rotated anticlockwise with respect to the position of Figure 5 and the second lever 16 is rotated clockwise with respect to the position of Figure 5. Because of the aforesaid rotations, the locking and supporting elements 18b and 19b disengage from the rod 5, moving away from the rod 5 so as to leave free the passage of the hooking means 6 of a sausage 4 that reaches at the supporting and synchronisation device 13. The sausage 4 can thus traverse the supporting and synchronisation device 13, but cannot go beyond, because it is stopped by the locking and supporting elements 18a, 19a.

In a third configuration, shown in Figure 7, the first lever 15 is rotated clockwise with respect to the position of Figure 5 and the second lever 16 is rotated anticlockwise with respect to the position of Figure 5. In this configuration, the locking and supporting elements 18b and 19b are again inserted into the respective seats of the rod 5, whilst the locking and supporting elements 18a and 19a are disengaged from the rod 5 so as to leave free the passage of the hooking means 6 of a sausage 4.

When the supporting and synchronisation device 13 adopts said third configuration, the hooking means 6 of a sausage 4 that has traversed the synchronisation device 13 can proceed further, to the conveying apparatus 14.

The three aforesaid configurations are adopted by the supporting and synchronisation device 13 according to a cyclical sequence, in which the second configuration follows the first configuration and the third configuration follows the second configuration and the first configuration follows the third configuration. Said cyclical sequence is so timed that the loading device 1 according to the invention is synchronised with the conveying apparatus 14, in such a manner that each sausage 4 is transferred to the conveying apparatus 14 only when a supporting element 26 is indicated in a receiving position, indicated by letter A in Figures 1 and 4.

With the second end 24 of the rod 5, facing the conveying apparatus 14, a guiding element 25 is associated that consists of a pair of rods that diverge in the advancement direction of the sausages, i.e. towards the conveying apparatus 14. When a sausage 4 reaches said end 24, the hooking means 6 thereof fits into the guiding element 25 so as to be directed to the conveying apparatus 14 and to be simultaneously wide apart, to promote the fitting thereof onto a supporting element 26.

With the guiding element 25 a safety element 27 is associated that locks the sausage 4 at the start of the guiding element 25, if a supporting element 26 of the conveying apparatus 14 is not in said receiving position A. The safety element 27 comprises a lever 28 driven by an operating cylinder 29. The lever 28 is provided with an arresting tooth that is suitable for hooking the hooking means 6 of a sausage 4 to lock the advancement of the sausage 4. The hooking means 6 is released by rotation of the lever 28 by the operating cylinder 29. Below the guiding element 25 a slide 30 is arranged that is used to convey to a collecting receptacle 31 the sausages that possibly do not hook to the supporting elements 26 of the conveyor 14.

The device according to the invention enables the sausages 6 to be loaded simply and reliably onto the conveying apparatus 14 and has a simple structure, without constructional complications.

In the practical embodiment, the materials, dimensions and constructional details can be different from those indicated but still be technically equivalent thereto without thereby falling outside the scope of the present invention.

## Claims

1. Loading device (1) for loading sausages onto a conveying apparatus (14) that is provided with supporting elements (26) suitable for receiving and supporting sausages (4), said loading device (1) comprising a supporting frame (2) on which a conveying device (3) is supported that is intended for conveying said sausages (4) to said conveying apparatus (14), and a guiding element (5) that is intended for guiding the sausages (4) through said loading device (1), said guiding element comprising a rod (5) supported in a first end zone (7) by a supporting element (9), **characterised in that** said rod (5) is supported, in a second end zone (12) opposite said first end zone (7), by a supporting and synchronisation element (13), that, in addition to supporting said rod (5), is suitable for synchronising the loading device (1) with said conveying device (14),
**characterized in that** said supporting and synchronisation element (13) comprises a first lever (15) and a second lever (16) that are both hinged on the same fulcrum (17), said first lever (15) being provided with a first pair of locking and supporting elements (18a, 18b) located at opposite positions with respect to the fulcrum (17), said second lever (16) being provided with a second pair of locking and supporting elements (19a, 19b) which are also located at opposite positions with respect to the fulcrum (17), said locking and supporting elements (18a, 18b, 19a, 19b) being suitable for being inserted into suitable seats of said rod (5).

2. Loading device (1) according to claim 1 wherein said supporting and synchronisation element (13) further comprises a first cam (20) associated with said first lever (15) and a second cam (21) associated with said second lever (16), said first cam 20 and said second cam (21) being rotated around respective rotation axes (22) and (23).

3. Loading device (1) according to claim 2, wherein said first cam (20) and said second cam (21) are suitable for respectively commanding an oscillation of said first lever (15) and of said second lever (16) around said fulcrum (17).

4. Loading device (1) according to any preceding claim, wherein said supporting element comprises a pair of pulleys (9).

5. Loading device (1) according to any preceding claim, wherein with one end (24) of said rod (5) facing said conveying device (14) a guiding element (25) is associated comprising a pair of rods that diverge in the advancing direction of the sausages, i.e. towards said conveying device (14).

6. Loading device (1) according to claim 5, wherein with said guiding element (25) a safety element (27) is associated that is used to stop a sausage (4) at the beginning of said guiding element (25), if a supporting element (26) of the conveying apparatus (14) is not in a receiving position (A) for receiving the sausage (4).

7. Loading device (1) according to claim 5, **characterised in that** it comprises a lever (28) driven by an operating cylinder (29), said lever (28) being provided with a stopping element that is suitable for hooking a hooking means (6) of a sausage (4) to stop an advance of the sausage (4) to said conveying apparatus (14).

## Patentansprüche

1. Beladeeinrichtung (1) zum Beladen von Würsten auf eine Fördervorrichtung (14), die mit Halteelementen (26) versehen ist, die zum Aufnehmen und Halten von Würsten (4) geeignet sind, wobei die Beladeeinrichtung (1) einen Halterahmen (2), an dem eine Fördereinrichtung (3) gehalten ist, die zum Fördern der Würste (4) zu der Fördervorrichtung (14) bestimmt ist, und ein Führungselement (5) aufweist, das zum Führen der Würste (4) durch die Beladeeinrichtung (1) bestimmt ist, wobei das Führungselement einen Stab (5) aufweist, der in einer ersten Endzone (7) durch ein Halteelement (9) gehalten ist, **dadurch gekennzeichnet, dass** der Stab (5) in einer zweiten Endzone (12), die der ersten Endzone (7) entgegengesetzt ist, durch ein Halte- und Synchronisationselement (13) gehalten ist, das, zusätzlich zum Halten des Stabes (5), zum Synchronisieren der Beladeeinrichtung (1) mit der Fördereinrichtung (14) geeignet ist,
**dadurch gekennzeichnet, dass** das Halte- und Synchronisationselement (13) einen ersten Hebel (15) und einen zweiten Hebel (16) aufweist, die beide an demselben Drehpunkt (17) angelenkt sind, wobei der erste Hebel (15) mit einem ersten Paar Verriegelungs- und Halteelementen (18a, 18b) versehen ist, die sich an entgegengesetzten Position bezüglich des Drehpunktes (17) befinden, wobei der zweite Hebel (16) mit einem zweiten Paar Verriegelungs- und Halteelementen (19a, 19b) versehen ist, die sich ebenfalls an entgegengesetzten Positionen bezüglich des Drehpunktes (17) befinden, wobei die Verriegelungs- und Halteelemente (18a, 18b, 19a, 19b) dazu geeignet sind, in geeignete Sitze des Stabs (5) eingesetzt zu werden.

2. Beladeeinrichtung (1) nach Anspruch 1, wobei das Halte- und Synchronisationselement (13) weiterhin einen ersten Nocken (20), der mit dem ersten Hebel (15) verknüpft ist, und einen zweiten Nocken (21) aufweist, der mit dem zweiten Hebel (16) verknüpft ist, wobei der erste Nocken (20) und der zweite Nocken (21) um jeweilige Drehachsen (22) und (23) gedreht werden.

3. Beladeeinrichtung (1) nach Anspruch 2, wobei der erste Nocken (20) und der zweite Nocken (21) zum jeweiligen Befehlssteuern einer Oszillation des ersten Hebels (15) und des zweiten Hebels (16) um den Drehpunkt (17) geeignet sind.

4. Beladeeinrichtung (1) nach irgendeinem vorhergehenden Anspruch, wobei das Halteelement ein Paar Rollen (9) aufweist.

5. Beladeeinrichtung (1) nach irgendeinem vorhergehenden Anspruch, wobei mit einem Ende (24) des Stabs (5), das der Fördereinrichtung (14) zugewandt ist, ein Führungselement (25) verknüpft ist, das ein Paar Stäbe aufweist, die in der Vorrückrichtung der Würste, d.h. zu der Fördereinrichtung (14) hin, divergieren.

6. Beladeeinrichtung (1) nach Anspruch 5, wobei mit dem Führungselement (25) ein Sicherheitselement (27) verknüpft ist, das dazu verwendet wird, eine Wurst (4) am Beginn des Führungselements (25) zu stoppen, wenn ein Halteelement (26) der Fördervorrichtung (14) nicht in einer Aufnahmeposition (A) zum Aufnehmen der Wurst (4) ist.

7. Beladeeinrichtung (1) nach Anspruch 5, **dadurch gekennzeichnet, dass** sie einen Hebel (28) aufweist, der von einem Betätigungszylinder (29) angetrieben ist, wobei der Hebel (28) mit einem Stoppelement versehen ist, das zum Einhaken eines Hakenmittels (6) einer Wurst (4) geeignet ist, um ein Vorrücken der Wurst (4) zu der Fördervorrichtung (14) zu stoppen.

## Revendications

1. Dispositif de chargement (1) pour le chargement de saucisses sur un appareil de transport (14) qui est équipé d'éléments de support (26) aptes à recevoir et supporter des saucisses (4), ledit dispositif de chargement (1) comprenant une armature de support (2), sur laquelle est porté un dispositif de transport (3) qui est destiné à transporter lesdites saucisses (4) jusqu'audit appareil de transport (14), et un élément de guidage (5) qui est destiné à guider les saucisses (4) à travers ledit dispositif de chargement (1), ledit élément de guidage comprenant une tige (5) portée dans une première zone d'extrémité (7) par un élément de support (9), **caractérisé en ce que** ladite tige (5) est portée, dans une deuxième zone d'extrémité (12) opposée à ladite première zone d'extrémité (7), par un élément de support et de synchronisation (13) qui est apte à assurer, en plus du support de ladite tige (5), la synchronisation du dispositif de chargement (1) avec ledit appareil de transport (14), **caractérisé en ce que** ledit élément de support et de synchronisation (13) comprend un premier levier (15) et un deuxième levier (16) qui sont l'un et l'autre articulés sur le même pivot (17), ledit premier levier (15) étant équipé d'une première paire d'éléments de verrouillage et de support (18a, 18b) situés en des positions opposées par rapport au pivot (17), ledit deuxième levier (16) étant équipé d'une deuxième paire d'éléments de verrouillage et de support (19a, 19b) qui sont également situés en des positions opposées par rapport au pivot (17), lesdits éléments de verrouillage et de support (18a, 18b, 19a, 19b) étant aptes à être insérés à l'intérieur de supports appropriés de ladite tige (5).

2. Dispositif de chargement (1) selon la revendication 1, dans lequel ledit élément de support et de synchronisation (13) comprend en outre une première came (20) associée audit premier levier (15) et une deuxième came (21) associée audit deuxième levier (16), ladite première came (20) et ladite deuxième came (21) étant en rotation autour d'axes de rotation respectifs (22) et (23).

3. Dispositif de chargement (1) selon la revendication 2, dans lequel ladite première came (20) et ladite deuxième came (21) sont aptes à commander une oscillation respectivement dudit premier levier (15) et dudit deuxième levier (16) autour dudit pivot (17).

4. Dispositif de chargement (1) selon une quelconque revendication précédente, dans lequel ledit élément de support comprend une paire de poulies (9).

5. Dispositif de chargement (1) selon une quelconque revendication précédente, dans lequel est associé à une extrémité (24) de ladite tige (5) faisant face audit dispositif de transport (14) un élément de guidage (25) comprenant une paire de tiges qui divergent dans la direction de progression des saucisses, c'est-à-dire en direction dudit dispositif de transport (14).

6. Dispositif de chargement (1) selon la revendication 5, dans lequel est associé audit élément de guidage (25) un élément de sécurité (27) qui est utilisé pour arrêter une saucisse (4) au début dudit élément de guidage (25) si un élément de support (26) de l'appareil de transport (14) n'est pas dans une position de réception (A) pour recevoir la saucisse (4).

7. Dispositif de chargement (1) selon la revendication 5, **caractérisé en ce qu'**il comprend un levier (28) entraîné par un vérin de commande (29), ledit levier (28) étant équipé d'un élément d'arrêt qui est apte à agripper des moyens d'accrochage (6) d'une saucisse (4) afin d'arrêter la progression de la saucisse (4) vers ledit appareil de transport (14).
